# EUROPEAN PATENT APPLICATION

(11) **EP 2 554 604 A1**
(43) Date of publication of application: **06.02.2013**
(21) Application number: 11762772.9
(22) Date of filing: 28.03.2011
(51) Int. Cl.: C08L 101/00, C08K 5/09, C08L 15/00

(54) **RESIN COMPOSITION**

(30) Priority: 30.03.2010 JP 2010078853
(71) Applicant: Zeon Corporation, Tokyo 100-8246 (JP)
(72) Inventor: SAKURAI, Takuro, Tokyo 100-8246 (JP); KITAHARA, Shizuo, Tokyo 100-8246 (JP)
(74) Representative: Albrecht, Thomas
(86) International application number: PCT/JP2011/057616
(87) International publication number: WO 2011/122548

(57) **Abstract**

An object of the invention is to provide a resin composition that exhibits sufficient oxygen absorption performance within a relatively short period after being placed in the presence of oxygen, even without including an oxidation catalyst such as a transition metal catalyst, and that furthermore suppresses the generation of malodor associated with oxygen absorption. The object is attained by providing a resin composition comprising an oxygen absorbing resin composition dispersed within a matrix resin, characterized in that the oxygen absorbing resin composition comprises a cyclized product of a conjugated diene polymer and a saturated fatty acid having 18 to 44 carbon atoms.

## Description

### Technical Field

The present invention relates to a resin composition having an oxygen absorption property. More specifically, it particularly relates to a resin composition having an excellent oxygen absorption property and low odor property so that it can be suitably used for constituting a packaging material for packaging products that are deteriorated by the presence of oxygen, such as foods, drinks, and pharmaceuticals.

### Background Art

The quality of foods, drinks, pharmaceuticals, and the like is deteriorated by contact with oxygen, and therefore they require storage in the absence of oxygen or under the condition with an extremely small amount of oxygen. Accordingly, containers or packages stored with foods, drinks, pharmaceuticals, or the like are often filled with inert gas such as nitrogen. However, this method is problematic in that, for example, the production cost may increase and, when they are once opened, air may flow into them from the outside and thereafter they can no more prevent the quality deterioration. Therefore, various investigations have been made for removing oxygen remaining in containers or packages.

Recently, as a way of removing oxygen, a method of preparing containers or packages using a resin composition having an oxygen absorption property and making the containers or the packages themselves have an oxygen absorption property receives wide attention. For such reasons, various studies are made with regard to a resin composition having an oxygen absorption property.

For example, it is disclosed in Patent Literature 1 that a composition containing a polymer with a carbon-carbon double bond such as 1,2-polybutadiene added with a (transition metal catalyst and further added with benzophenone or the like exhibits an excellent oxygen scavenging (absorbing) performance. Further, it is disclosed in Patent Literature 2 that a resin composition containing polybutadiene and the like added with a transition metal catalyst (oxidation catalyst) and higher unsaturated fatty acid such as oleic acid exhibits an excellent oxygen absorption performance.

The compositions disclosed in Patent Literatures 1 and 2 contain a transition metal catalyst as an essential component, and by further added with a component (oxygen absorption promoting agent) such as benzophenone or higher unsaturated fatty acid, the reaction between a carbon-carbon double bond in a polymer such as polybutadiene and oxygen (oxidation reaction) is promoted, and therefore the composition can exhibit an excellent oxygen absorption performance. However, the oxygen absorbing composition containing a transition metal catalyst and an oxygen absorption promoting agent is problematic in that it may easily generate strong malodor associated with the oxygen absorption. Since the resin composition having an oxygen absorption property is used for containers or packages of foods, drinks, pharmaceuticals or the like, generation of malodor is a very significant problem.

Thus, one of the inventors of the invention has suggested a resin composition using a cyclized product of a conjugated diene polymer as an oxygen absorbing resin, in which the resin composition can exhibit an excellent oxygen absorption property without containing a transition metal catalyst. For example, in Patent Literature 3, an oxygen absorbing resin composition having an excellent oxygen absorption property and low odor property obtained by a resin composition comprising an oxygen absorbing resin such as a cyclized product of a conjugated diene polymer and a softening agent dispersed in a resin with low oxygen permeability such as a polyamide resin is suggested. To obtain an oxygen absorption performance at sufficient level under room temperature condition, however, it is necessary to place it in the presence of oxygen for a relatively long period of time such as 10 days or so, and therefore further improvements have been needed from the view point of an oxygen absorption property under room temperature condition.

### Citation List

### Patent Literature

Patent Literature 1: Japanese PCT National Publication No. H08-502306
Patent Literature 2: Japanese Patent Application Laid-Open (JP-A) No. 2007-204694
Patent Literature 3: WO No. 2008/102701

### Summary of Invention

### Technical Problem

An object of the present invention is to provide a resin composition that exhibits sufficient oxygen absorption performance within a relatively short period of time after being placed in the presence of oxygen, even without including an oxidation catalyst such as a transition metal catalyst, and that furthermore suppresses the generation of malodor associated with oxygen absorption.

### Solution to Problem

The present inventors of the present invention conducted intensive studies to achieve the object described above, and as a result found that, when an oxygen absorbing resin composition is prepared by adding a specific saturated fatty acid to a cyclized product of a conjugated diene polymer and dispersing the resin in a matrix resin, a resin composition that exhibits sufficient oxygen absorption performance within a relatively short period of time after being placed in the presence of oxygen, even without including an oxidation catalyst, and that furthermore suppresses the generation of malodor associated with oxygen absorption can be obtained. The present invention is accomplished on the basis of these findings.

Accordingly, provided by the present invention is a resin composition comprising an oxygen absorbing resin composition dispersed in a matrix resin, characterized in that the oxygen absorbing resin composition comprises a cyclized product of a conjugated diene polymer and a saturated fatty acid having 18 to 44 carbon atoms.

In the resin composition, a pour point of the saturated fatty acid having 18 to 44 carbon atoms is preferably 25°C or less.

In the resin composition, the saturated fatty acid having 18 to 44 carbon atoms is preferably an isostearic acid or a hydrogenated product of dimer acid.

In the resin composition, addition amount of the saturated fatty acid having 18 to 44 carbon atoms is preferably 0.1 to 50% by weight relative to total amount of the oxygen absorbing resin composition.

In the resin composition, the oxygen absorbing resin composition preferably further comprises a softening agent.

In the resin composition, the matrix resin is preferably a polyamide resin or a polybutylene terephthalate resin.

Further, according to the invention, a film for packaging characterized by comprising the resin composition described above is provided.

### Advantageous Effects of Invention

According to the invention, a resin composition that exhibits sufficient oxygen absorption performance within a relatively short period after being placed in the presence of oxygen, even without including an oxidation catalyst such as a transition metal catalyst, and that furthermore suppresses the generation of odors associated with oxygen absorption can be obtained.

### Description of Embodiments

The resin composition of the present invention is a resin composition comprising an oxygen absorbing resin composition dispersed in a matrix resin, characterized in that the oxygen absorbing resin composition comprises a cyclized product of a conjugated diene polymer and a saturated fatty acid having 18 to 44 carbon atoms and the oxygen absorption property is exhibited by oxidation of the cyclized product of the conjugated diene polymer contained in the oxygen absorbing resin composition.

According to the invention, the cyclized product of a conjugated diene polymer which is used as a resin for constituting the oxygen absorbing resin composition is obtained by cyclization reaction of a conjugated diene polymer in the presence of an acid catalyst, in which a ring structure is included in the molecule and at least one double bond is included in the ring structure.

The conjugated diene polymer to be used for obtaining a cyclized product of a conjugated diene polymer includes a homopolymer of a conjugated diene monomer, a copolymer of two or more conjugated diene monomers, and a copolymer of a conjugated diene monomer and a monomer copolymerizable with it. The conjugated diene monomer is not particularly limited, and examples thereof include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, and 3-butyl-1,3-octadiene. The monomer may be used either singly or in combination of two or more.

The other monomer copolymerizable with the conjugated diene monomer includes, for example, aromatic vinyl monomers such as styrene, o-methylstyrene, p-methylstyrene, m-methylstyrene, 2,4-dimethylstyrene, ethylstyrene, p-tert-butylstyrene, α-methylstyrene, α-methyl-p-methylstyrene, o-chlorostyrene, m-chlorostyrene, p-chlorostyrene, p-bromostyrene, 2,4-dibromostyrene, or vinyl naphthalene; linear olefin monomers such as ethylene, propylene, or 1-butene; cyclic olefin monomers such as cyclopentene or 2-norbornene; non-conjugated diene monomers such as 1,5-hexadiene, 1,6-heptadiene, 1,7-octadiene, dicyclopentadiene, or 5-ethylidene-2-norbornene; (meth)acrylate esters such as methyl (meth)acrylate or ethyl (meth)acrylate; other (meth)acrylic acid derivatives such as (meth)acrylonitrile or (meth)acrylamide. The monomer may be used either singly or in combination of two or more. Further, mode of copolymerization is not specifically limited, and it may be a block copolymer or a random copolymer, for example.

Specific examples of the conjugated diene polymer include natural rubber (NR), styrene-isoprene rubber (SIR), styrene-butadiene rubber (SBR), polyisoprene rubber (IR), polybutadiene rubber (BR), isoprene-isobutylene copolymer rubber (IIR), ethylene-propylene-diene copolymer rubber
(EPDM), butadiene-isoprene copolymer rubber (BIR), a styrene-isoprene block polymer, a styrene-butadiene block polymer. Of these, preferred are polyisoprene rubber, polybutadiene rubber, and a styrene-isoprene block polymer; and more preferred are polyisoprene rubber and a styrene-isoprene block polymer. Polyisoprene rubber is most preferably used. The conjugated diene polymer may be used either singly or in combination of two or more.

The content of the conjugated diene monomer unit in the conjugated diene polymer is not particularly limited, but in general, it may be 40 mol% or more, preferably 60 mol% or more, and more preferably 80 mol% or more. The conjugated diene polymer may be prepared in an ordinary polymerization method, and for example, it may be prepared through solution polymerization or emulsion polymerization using a suitable catalyst such as a Ziegler polymerization catalyst, an alkyl lithium polymerization catalyst, or a radical polymerization catalyst for polymerization of a conjugated diene monomer to give a conjugated diene polymer. It is also possible to use a conjugated diene polymer which is obtained by polymerization using a Ziegler polymerization catalyst and metathesis decomposition using a catalyst such as ruthenium and tungsten.

The cyclized product of a conjugated diene polymer to be used in the invention may be prepared through cyclization reaction of the conjugated diene polymer described above in the presence of an acid catalyst. The acid catalyst for use in the cyclization reaction may be any known one. Its specific examples include sulfuric acid; organic sulfonic acid compounds such as fluoromethane sulfonic acid, difluoromethane sulfonic acid, p-toluene sulfonic acid, xylene sulfonic acid, alkyl benzene sulfonic acids having an alkyl group with 2 to 18 carbon atoms, or their anhydrides and alkyl esters; Lewis acids such as boron trifluoride, boron trichloride, tin tetrachloride, titanium tetrachloride, aluminum chloride, diethyl aluminum monochloride, ethyl ammonium chloride, aluminum bromide, antimony pentachloride, tungsten hexachloride, or iron chloride. The acid catalyst may be used either singly or in combination of two or more. Further, as a co-catalyst, tert-butyl chloride or trichloroacetic acid may be used in combination. Of these, preferred are organic sulfonic acid compounds; and more preferred are p-toluene sulfonic acid or xylene sulfonic acid. The amount of the acid catalyst to be used may be generally 0.05 to 10 parts by weight per 100 parts by weight of the conjugated diene polymer, preferably 0.1 to 5 parts by weight, and more preferably 0.3 to 2 parts by weight.

In general, the conjugated diene polymer is dissolved in a solvent for its cyclization reaction. The solvent is not particularly limited, and may be any one not interfering with the cyclization reaction, but hydrocarbon solvents including aromatic hydrocarbons such as benzene, toluene, xylene, or ethyl benzene; aliphatic hydrocarbons such as n-pentane, n-hexane, n-heptane, or n-octane; alicyclic hydrocarbons such as cyclopentane or cyclohexane are preferably used. Preferably, the boiling point of those hydrocarbon solvents is 70°C or more. The solvent used for the polymerization reaction of the conjugated diene polymer and the solvent used for the cyclization reaction may be the same type. In this case, an acid catalyst for cyclization reaction may be added to the polymerization reaction liquid after polymerization reaction, whereby the cyclization reaction may be attained after the polymerization reaction. The amount of the hydrocarbon solvent to be used may be such that the solid concentration of the conjugated diene polymer therein is generally 5 to 60% by weight, and preferably 20 to 40% by weight.

The cyclization reaction may be attained under pressure or under reduced pressure, or under atmospheric pressure, but from the view point of the simplicity in operation, it is preferably carried out under atmospheric pressure. The cyclization reaction in a dry air stream, especially in an atmosphere of dry nitrogen or dry argon may prevent side reactions caused by moisture. The reaction temperature and the reaction time in the cyclization reaction are not specifically limited. The reaction temperature may be generally 50 to 150°C, and preferably 70 to 110°C; and the reaction time may be generally 0.5 to 10 hours, and preferably 2 to 5 hours. After the cyclization reaction, the acid catalyst is inactivated in an ordinary manner, then the acid catalyst residue is removed, and thereafter the hydrocarbon solvent is removed, thereby giving a solid cyclized product of a conjugated diene polymer.

The unsaturated bond reduction ratio of the cyclized product of a conjugated diene polymer used for preparing the oxygen absorbing resin composition is not specifically limited. It is preferably 56% or more, more preferably 59 to 80%, and still more preferably 62 to 75%. Using the cyclized product of a conjugated diene polymer which has unsaturated bond reduction ratio within the above range, generation of malodor associated with oxygen absorption by the oxygen absorbing resin composition can be further inhibited. Further, as a cyclized product of a conjugated diene polymer, two or more types of the cyclized product of a conjugated diene polymers having different unsaturated bond reduction ratio may be used in combination.

The unsaturated bond reduction ratio of the cyclized product of a conjugated diene polymer is an index that indicates the degree of unsaturated bond reduction through cyclization reaction in the conjugated diene monomer unit segment in the conjugated diene polymer; and its value is determined in the manner to be described below. Specifically, in the conjugated diene monomer unit segment in a conjugated diene polymer, the ratio of the peak area of the protons directly bonded to the double bond to the peak area of all protons is determined through proton NMR analysis before and after cyclization reaction, and the reduction ratio is calculated from the data. Specifically, the unsaturated bond reduction ratio can be determined for a cyclized product of a conjugated diene polymer, as described below. In the conjugated diene monomer unit segment in a conjugated diene polymer, when the overall proton peak area before cyclization reaction is represented by SBT, the peak area of the protons directly bonded to the double bond before cyclization reaction is by SBU, the overall proton peak area after cyclization reaction is represented by SAT, and the peak area of the protons directly bonded to the double bond after cyclization reaction is by SAU, then the peak area ratio (SB) of the protons directly bonded to the double bond before cyclization reaction is: SB = SBU/SBT, and the peak area ratio (SA) of the protons directly bonded to the double bond after cyclization reaction is: SA = SAU/SAT. Accordingly, the unsaturated bond reduction ratio is determined according to the following equation: Unsaturated bond reduction ratio (%) = 100 × (SB - SA)/SB.

The unsaturated bond reduction ratio of the cyclized product of a conjugated diene polymer may be controlled by suitably selecting the amount of the acid catalyst, the reaction temperature, the reaction time and others in cyclization reaction of a conjugated diene polymer.

The weight average molecular weight of the cyclized product of a conjugated diene polymer is generally 1,000 to 1,000,000, in terms of standard polystyrene measured through gel permeation chromatography, preferably 50,000 to 500,000, and more preferably 80,000 to 300,000. The weight average molecular weight of the cyclized product of a conjugated diene polymer can be controlled by appropriately selecting the weight average molecular weight of the conjugated diene polymer used for cyclization. In case where the cyclized product of a conjugated diene polymer is a cyclized product of an aromatic vinyl monomer/conjugated diene copolymer, the weight average molecular weight of the aromatic vinyl polymer block is preferably 1,000 to 300,000. By setting appropriate weight average molecular weight of the cyclized product of a conjugated diene polymer, not only the solution viscosity can be maintained at appropriate level during the cyclization reaction but also processability or mechanical strength of the resin composition obtained is improved.

Content of the gel in the cyclized product of a conjugated diene polymer may be generally 10% or less by weight, and preferably 5% or less by weight in terms of the content of the toluene insoluble component, but more preferably the cyclized product contains substantially no gel. When the gel content is too much, the resin composition obtained may have poor processability.

The glass transition temperature of a cyclized product of a conjugated diene polymer, which is used for constituting the oxygen absorbing resin composition, is not specifically limited. However, it is generally 40°C or more, preferably 50°C or more, and more preferably 55°C to 80°C The glass transition temperature of a cyclized product of a conjugated diene polymer can be controlled by adjusting the reduction ratio of unsaturated bond in a cyclized product of a conjugated diene polymer or the like, depending on the type of a conjugated diene polymer used for obtaining a cyclized product of a conjugated diene polymer.

The oxygen absorbing resin composition used in the invention contains, in addition to a cyclized product of a conjugated diene polymer, a saturated fatty acid having 18 to 44 carbon atoms. By containing a saturated fatty acid having 18 to 44 carbon atoms, the oxygen absorbing resin composition can have shortened time required to have sufficient oxygen absorption rate once it is placed in the presence of oxygen (that is, oxygen absorption is promoted). Further, generation of malodor associated with oxygen absorption can be suppressed. Specific example of the saturated fatty acid used for the invention include linear saturated fatty acids having 18 to 44 carbon atoms such as stearic acid, arachidic acid, behenic acid, and lignoceric acid, branched saturated fatty acids having 18 to 44 carbon atoms such as isostearic acid, isoarachidic acid, isobehenic acid, and isolignoceric acid, and fatty acids having 18 to 44 carbon atoms as a hydrogenated product of a multimer of unsaturated fatty acids such as hydrogenated product of a dimer acid. The saturated fatty acid having 18 to 44 carbon atoms may be used either singly or in combination of two or more.

Pour point (JIS K2269) of the saturated fatty acid having 18 to 44 carbon atoms that is used for the invention is, although not specifically limited, preferably 25°C or less. Using the saturated fatty acid having 18 to 44 carbon atoms having pour point of 25°C or less, the oxygen absorbing resin composition obtained can have an excellent absorbing property particularly at room temperature. Specific examples of the saturated fatty acid having 18 to 44 carbon atoms having pour point of 25°C or less include an isostearic acid and a hydrogenated product of dimer acid. In addition, the saturated fatty acid having 18 to 44 carbon atoms preferably has compatibility with a cyclized product of a conjugated diene polymer, while it preferably has no compatibility with a matrix resin described below.

In the oxygen absorbing resin composition, addition amount of the saturated fatty acid having 18 to 44 carbon atoms is, although not specifically limited, generally 0.1 to 50% by weight, preferably 0.5 to 45% by weight, and more preferably 1.0 to 40% by weight relative to total amount of the oxygen absorbing resin composition.

The oxygen absorbing resin composition used in the invention preferably has glass transition temperature of -5°C to +20°C. Using the oxygen absorbing resin composition having such glass transition temperature, an oxygen absorbing resin composition with excellent oxygen absorption property at room temperature, in particular, can be provided. Glass transition temperature of the oxygen absorbing resin composition can be easily controlled by adjusting the mixing ratio of each component, in consideration of the glass transition temperature of each component for constituting the oxygen absorbing resin composition. Further, when a glass transition temperature of a composition obtained by mixing a cyclized product of a conjugated diene polymer and a saturated fatty acid having 18 to 44 carbon atoms is too high, the glass transition temperature of the oxygen absorbing resin composition can be controlled to be within a suitable range by further adding a softening agent.

As a softening agent, a liquid which itself has glass transition temperature of -30°C or less is suitably used. Further, the softening agent preferably has compatibility with a cyclized product of a conjugated diene polymer but not with a matrix resin described below. Specific examples of the softening agent include hydrocarbon oils such as isoparaffin oil, naphthene oil, or liquid paraffin; olefin polymers (low molecular weight) such as polybutene, polyisobutylene, atactic polypropylene, ethylene-α-olefin copolymer (linear low density polyethylene (LLDPE), or linear very low density polyethylene (LVLDPE); hydrogenated products of conjugated diene polymer (low molecular weight) such as polyisoprene or polybutadiene; hydrogenated products of styrene-conjugated diene polymers (low molecular weight), and; fatty acid esters. Of these, hydrocarbon oils are preferably used. Liquid paraffin is particularly preferably used. The softening agent may be used either singly or in combination of two or more.

Addition amount of the softening agent is determined depending on type or addition ratio of each component contained in the oxygen absorbing resin composition in such a manner that the glass transition temperature of the oxygen absorbing resin composition is controlled within a desired range. However, compared to total amount of the oxygen absorbing resin composition, it is generally 0 to 30% by weight, preferably 1 to 25% by weight, and more preferably 3 to 20% by weight.

The oxygen absorbing resin composition may be added with an antioxidant, if necessary. By adding an antioxidant to the resin, the stability of oxygen absorbing resin composition is improved, and handleability is also improved during processing or the like. Content of an antioxidant in the oxygen absorbing resin composition is, although not specifically limited, generally 5, 000 ppm by weight or less, preferably 3, 000 ppm by weight or less, more preferably 2,000 ppm by weight or less, and still more preferably 500 ppm by weight or less. When the content of the antioxidant is excessively high, oxygen absorption by the oxygen absorbing resin composition may be inhibited.

The antioxidant is not particularly limited and may be any one generally used in the field of resin materials or rubber materials. Typical examples of the antioxidant include hindered phenolic antioxidants, phosphorus-containing antioxidants, and lactone-based antioxidants. Two or more types of such antioxidants may be used as combined. Of these, a phosphorus-containing antioxidant is preferably used. In addition, an amine-based light stabilizer (HALS) may also be added in addition to the antioxidant.

The oxygen absorbing resin composition may be added with other resin in addition to the cyclized product of a conjugated diene polymer. For example, by adding a poly-α-olefin resin, mechanical strength of the composition obtained can be improved. Examples of the poly α-olefin resin may be any of a homopolymer of α-olefin, a copolymer of two or more types of α-olefins, or a copolymer of an α-olefin and a monomer except α-olefin, and may also be a modified derivative of these (co)polymers. Specific examples of the poly α-olefin resin include linear low density polyethylene (LLDPE), low density polyethylene (LDPE), middle density polyethylene (MDPE), high density polyethylene (HDPE), metallocene polyethylene, polypropylene, metallocene polypropylene, polymethylpentene, polybutene, ethylene-propylene random copolymer, ethylene-propylene block copolymer, ethylene-propylene-polybutene-1 copolymer, and ethylene-cyclic olefin copolymer. The poly α-olefin resin may be used either singly or in combination of two or more.

It is also possible that the oxygen absorbing resin composition is added with an oxidation catalyst for promoting oxidation reaction of a cyclized product of a conjugated diene polymer. Representative examples of the oxidation catalyst include salts of a transition metal (transition metal based catalyst) such as manganese, iron, cobalt, nickel, copper, rhodium, and ruthenium. Examples of the type of the transition metal salt include chlorides, acetates, stearates, palmitates, ethyl 2-ethyl hexanotates, neodecanoates, and naphthonates. However, since the cyclized product of a conjugated diene polymer that is used for constituting the oxygen absorbing resin composition of the invention is a resin which exhibits satisfactory oxygen absorbing property even in the absence of an oxidation catalyst, addition of an oxidation catalyst is not always necessary. From the view point of suppressing generation of malodor associated with oxygen absorption, it is preferable that substantially no oxidation catalyst (transition metal based catalyst) is included in the oxygen absorbing resin composition.

To the oxygen absorbing resin composition of the invention, other components may be also added, if necessary. Specific examples of other components that may be added include a filler such as calcium carbonate, alumina, and titanium oxide; a tackifier (hydrogenated petroleum resin, hydrogenated terpene resin, castor oil derivatives, sorbitan higher fatty acid esters, and low molecular weight polybutene); a surface active agent; a leveling agent; an UV absorbing agent; a light stabilizer; a dehydrating agent; a pot life extender (acetyl acetone, methanol, methyl orthoacetate, and the like); and a cissing-improving agent.

The oxygen absorbing rate of the oxygen absorbing resin composition used in the invention is, although not specifically limited, preferably 0.01 cc/100 cm²·day or more at 30°C. As described herein, the oxygen absorbing rate of the oxygen absorbing resin composition used in the invention is represented by the volume (unit: cc) of oxygen absorbed by a film for one day (24 hours) per unit volume (100 cm²), when a film (thickness: 20 µm) made of the oxygen absorbing resin composition to be tested is placed in dry air with constant volume under atmospheric pressure and temperature of 30°C. When an oxygen absorbing resin composition with excessively low oxygen absorbing rate is used, a composition with insufficient oxygen absorption property will be obtained.

The resin composition of the invention is obtained by dispersing the oxygen absorbing resin composition described above in a matrix resin. Using the oxygen absorbing resin composition dispersed in a matrix resin, a resin composition having excellent mechanical strength or moldability as well as oxygen absorption property can be obtained. The matrix resin that is used in the invention is not specifically limited, if it can disperse the oxygen absorbing resin composition. However, from the view point of processability, it is preferably a thermoplastic resin. Specific examples of the thermoplastic resin that can be used as a matrix resin include poly α-olefin resins; aromatic vinyl resins such as polystyrene; vinyl halide resins such as polyvinyl chloride; polyvinyl alcohol resins such as polyvinyl alcohol, or an ethylene-vinyl alcohol copolymer; fluororesins; acrylic resins such as a methacrylic resin; polyamide resins such as polyamide 6 resin, polyamide 66 resin, polyamide 610 resin, polyamide 11 resin, polyamide 12 resin, and their copolymers; polyester resins such as polyethylene terephthalate, polybutylene terephthalate, or terephthalic acid-cyclohexane dimethanol based polyester; polycarbonate resins; polyurethane resins. Of those, the thermoplastic resin containing a polar group is preferably used. Polyamide resin or polybutylene terephthalate resin is particularly preferably used as it has good moldability and flexibility suitable for a molding material.

To the matrix resin, other components may be also added. Specific examples of other components that may be added include a heat stabilizer; a UV absorbent; a colorant; a pigment; a neutralizing agent; a plasticizer such as a phthalate ester or a glycol ester; a filler such as calcium carbonate, alumina, and titanium oxide; a tackifier (hydrogenated petroleum resin, hydrogenated terpene resin, castor oil derivatives, sorbitan higher fatty acid esters, and low molecular weight polybutene); a surface active agent; a leveling agent; an UV absorbing agent; a light stabilizer; a dehydrating agent; a pot life extender (acetyl acetone, methanol, methyl orthoacetate, and the like) ; and a cissing-improving agent.

The method for dispersing the oxygen absorbing resin composition in a matrix resin is not particularly limited, and any known method may be adopted. However, from the view point of convenience of a process and saving cost, melt kneading is suitably used. Further, for dispersing the oxygen absorbing resin composition in a matrix resin, it is not necessary to mix each component in advance. Instead, each may be mixed all at a time, or mixed in any order to yield the oxygen absorbing resin composition dispersed in a matrix resin.

With regard to the resin composition of the invention, the mixing ratio between the oxygen absorbing resin composition and the matrix resin is, although not specifically limited, preferably 5/95 to 50/50, and more preferably 20/80 to 40/60, in terms of weight ratio of the oxygen absorbing resin composition/the matrix resin. By having the weight ratio of the oxygen absorbing resin composition/the matrix resin within this range, particularly a resin composition having favorable balance between the oxygen absorption property and the level of suppressing generation of malodor can be obtained.

The resin composition of the invention may be also added with a compatibilizer or a dispersion stabilizer. Specific examples of the compatibilizer and dispersion stabilizer include maleic anhydride modified products of polypropylene or polyethylene, or a hydrocarbon based polymer containing a polar group obtained by modification of a styrene based polymer such as a styrene/diene block copolymer (styrene-isoprene block copolymer, styrene-butadiene block copolymer, styrene-isoprene-styrene block copolymer, or the like) or hydrogenated products thereof. If desired, other components such as an anti-blocking agent, an antifogging agent, a heat-resistant stabilizer, a weather-resistant stabilizer, a lubricant, an antistatic agent, a reinforcing agent, a flame retardant, a coupling agent, a blowing agent, a releasing agent, or the like may be added to the resin composition of the invention.

For dispersing the oxygen absorbing resin composition in a matrix resin according to melt kneading, examples of an apparatus that can be used include, although not specifically limited, a continuous kneading machine such as continuous intensive mixer (unidirectional or multidirectional), kneading-type twin-screw extruder, mixing roll, or co-kneader; a batch-type kneading machine such as high-speed mixer, Banbury mixer, intensive mixer, or pressure kneader; a rotary disc-assisted device having a grinding mechanism such as stone mill, for example, KCK's KCK melt-kneading extruder; a single-screw extruder equipped with a kneading zone (Dalmadge, CTM, and the like); a simple kneading machine such as ribbon blender and Brabender mixer. The temperature for kneading is generally in the range of 50 to 300°C, and preferably in the range of 170 to 250°C.

As a material having oxygen absorbing property, the resin composition of the invention obtained as described above can be suitably used for various applications. Among them, it is particularly suitably used as a packaging material to be used for packaging products such as foods, drinks, and pharmaceuticals. The resin composition of the invention exhibits sufficient oxygen absorption performance within a relatively short period after being placed in the presence of oxygen, and suppresses the generation of malodor associated with oxygen absorption, and therefore it can be suitably used as a packaging material for packaging foods, drinks, pharmaceuticals or the like which have easily-deteriorated product quality and malodor in contact with oxygen.

The resin composition of the invention may be used as a packaging material after molded into various shapes. For example, it may be molded into a film shape and provided as a film for packaging. Meanwhile, a "film" and a "sheet" may be differentiated by their thickness, but in this invention, the film has a concept that includes both a "film" and a "sheet".

The film for packaging using the resin composition of the invention may be produced from the resin composition of the invention according to a known method. For example, the film may be produced according to a solution-casting method that includes dissolving the resin composition in a solvent and then casting the solution onto a nearly flat face and drying it thereon. In addition, for example, the resin composition may be melt-kneaded in an extruder, then extruded out through a T-die, a circular die (ring die), or the like to give a predetermined shape, thereby producing a T-die film, a blown film, or the like. As the extruder, usable is a melt-kneading machine such as a single-screw extruder, a twin-screw extruder, or a Banbury mixer. The T-die film may be biaxially stretched to give a biaxially stretched film. Further, a film may be produced by inflation (blown) molding.

The packaging film obtained using the resin composition of the invention may further has a layer other than the layer made of the resin composition of the invention (herein after, the layer may be referred to as an "oxygen absorbing layer". For example, it may be provided as a multilayer film (herein after, the film may be referred to as "oxygen absorbing multilayer film"). The layer other than the oxygen absorbing layer is not particularly limited, but its examples include a gas barrier material layer, a sealing material layer, a protective layer, an adhesive layer.

In the film for packaging obtained using the resin composition of the invention, the oxygen absorbing layer absorbs oxygen from the outside having passed through the gas barrier material layer. When a packaging material including the oxygen absorbing multilayer film is formed into, for example, a bag-shaped packaging container, the layer is to be a layer that has the function of absorbing the oxygen inside the packaging container through the oxygen-permeable layer (sealing material layer) thereof.

The gas barrier material layer is a layer to be provided for preventing permeation of gases from the outside. The gas barrier material layer is to be an outer layer when the oxygen absorbing multilayer film is formed, for example, into a bag-shaped packaging material. The oxygen permeation rate of the gas barrier material layer is preferably as low as possible, so far as the processability and the cost permit it; and irrespective of its thickness, the layer is necessary to have an oxygen permeation rate of less than 100 cc/m²·atm·day (25°C, 90% RH), and more preferably 50 CC/m²atm·day (25°C, 90% RH) or less.

The material to constitute the gas barrier material layer is not particularly limited, so far as it has low permeability to gases such as oxygen and steam, and for which, for example, usable are metals, inorganic materials, resins or the like. As the metal, generally used is aluminum having low gas permeability. The metal may be laminated on a resin film or the like as a foil thereon, or a thin metal film may be formed on a surface of a resin film or the like through vapor deposition thereon. As the inorganic material, usable is a metal oxide such as silica or alumina. Such metal oxides may be used either singly or as combined, and may be deposited on a resin film or the like by vapor deposition thereon. Though not comparable to metals and inorganic materials in terms of their gas barrier properties, resins may have many choices in view of mechanical properties, thermal properties, chemical resistance, optical properties, and production methods; and because of such advantages, resins are favorably used as the gas barrier material. The resins usable for the gas barrier material layer in the invention are not particularly limited, and may be any ones having good gas barrier properties; and chlorine free resins are favorable as not generating harmful gas on incineration. Of those, preferred for use herein is a transparent vapor-deposition film produced by vapor deposition of an inorganic oxide on a resin film.

Specific examples of the resins for use in the gas barrier material layer include polyvinyl alcohol resins such as polyvinyl alcohol or an ethylene-vinyl alcohol copolymer; polyester resins such as polyethylene terephthalate or polybutylene terephthalate; polyamide resins such as MXD nylon (polymetaxylylene adipamide); halogenated vinyl resin such as polyvinylidene chloride; and polyacrylonitrile. An inorganic oxide such as aluminum oxide or silicon oxide may be vapor-deposited on the gas barrier material layer. These resins may be appropriately selected in accordance with the object of the intended multilayer film and in consideration of the desired necessary properties thereof, for example, gas barrier properties, mechanical properties such as strength, toughness, and rigidity, as well as heat resistance, printability, transparency, adhesiveness, or the like. The resin may be used either singly or in combination of two or more.

To the resin employed as a gas barrier material layer, optionally added are a heat-resistant stabilizer; a UV absorbent; an antioxidant; a colorant; a pigment; a neutralizing agent; a plasticizer such as phthalate or glycol ester; a filler; a surface active agent; a leveling agent; a light stabilizer; a dehydrating agent such as alkaline earth metal oxide; a deodorant such as activated carbon or zeolite; a tackifier (castor oil derivatives, sorbitan higher fatty acid esters, and low-molecular weight polybutenes); a pot life extender (acetylacetone, methanol, methyl orthoacetate, and like) ; a cissing-improving agent; other resins (poly α-olefins and the like) ; and the like. If desired, an anti-blocking agent, an antifogging agent, a heat-resistant stabilizer, a weather-resistant stabilizer, a lubricant, an antistatic agent, a reinforcing agent, a flame retardant, a coupling agent, a blowing agent, a mold releasing agent, or the like may be added to the composition.

A protective layer may be formed outside the gas barrier material layer for imparting heat resistance or the like. The resin for use in the protective layer includes ethylene polymers such as high density polyethylene; propylene polymers such as propylene homopolymer, propylene-ethylene random copolymer, and propylene-ethylene block copolymer; polyamides such as polyamide 6 and polyamide 66; polyesters such as polyethylene terephthalate; and the like. Of those, preferred are polyamides and polyesters. Meanwhile, as a gas barrier material layer, when a polyester film, a polyamide film, a film vapor-deposited with inorganic oxide, a film coated with vinylidene chloride, or the like is used, the gas barrier material layer functions also as a protection layer.

In an oxygen absorbing multilayer film, the sealing material layer is melt by heat and adhered (heat seal) to each other. As a result, it has a function of forming a space within a packaging container which is separated from outside of the packaging container. Further, it allows permeation and absorption of oxygen by an oxygen absorbing layer while preventing direct contact between an oxygen absorbing layer and a stuff to be packaged inside the packaging container. Specific examples of the heat adhesive resin used for forming a sealing material layer include a poly-α-olefin resin such as a homopolymer of ethylene and a homopolymer of an α-olefin such as propylene, for example, low density polyethylene, medium density polyethylene, high density polyethylene, linear low density polyethylene, metallocene polyethylene, polypropylene, polymethylpentene, and polybutene; a copolymer of ethylene with α-olefin, for example, ethylene-propylene copolymer; a copolymer of an α-olefin as a main component with vinyl acetate, acrylic acid ester, or methacrylic acid ester, for example, ethylene-vinyl acetate copolymer, ethylene-ethyl acrylate copolymer, ethylene-methyl methacrylate copolymer, ethylene-acrylic acid copolymer, ethylene-methacrylic acid copolymer, or the like; an acid-modified poly α-olefin resin prepared by modifying an α-olefin (co)polymer such as polyethylene or polypropylene, with an unsaturated carboxylic acid such as acrylic acid, methacrylic acid, maleic acid, maleic anhydride, fumaric acid, or itaconic acid; an ionomer resin prepared by processing an ethylene-methacrylic acid copolymer or the like with Na ion or Zn ion; and their mixtures.

To the heat adhesive resin, if desired, optionally added are an antioxidant; a tackifier (hydrogenated petroleum resins, hydrogenated terpene resins, castor oil derivatives, sorbitan higher fatty acid esters, low molecular weight polybutene, and the like); an antistatic agent; a filler; a plasticizer (phthalate esters, glycol esters, and the like); a surface active agent; a leveling agent; a heat-resistant stabilizer; a weather-resistant stabilizer; a UV absorbent; a light stabilizer; a dehydrating agent; a pot life extender (acetylacetone, methanol, methyl orthoacetate, and the like) ; a cissing-improving agent; an anti-blocking agent; an antifogging agent; a lubricant; a reinforcing agent; a flame retardant; a coupling agent; a blowing agent; a releasing agent; a colorant; a pigment; or the like.

The antioxidant may be the same as those that may be added to the oxygen absorbing resin composition. The anti-blocking agent includes silica, calcium carbonate, talc, zeolite, starch, and the like. The anti-blocking agent may be kneaded in a resin or may be adhered to the surface of a resin. The antifogging agent includes higher fatty acid glycerides such as diglycerin monolaurate, diglycerin monopalmitate, diglycerin monooleate, diglycerin dilaurate, or triglycerin monooleate; polyethylene glycol higher fatty acid esters such as polyethylene glycol oleate, polyethylene glycol laurate, polyethylene glycol palmitate, or polyethylene glycol stearate; polyoxyethylene higher fatty acid alkyl ethers such as polyoxyethylene lauryl ether or polyoxyethylene oleyl ether; and the like.

The lubricant includes higher fatty acid amides such as stearamide, oleamide, erucamide, behenamide, ethylene bisstearamide, and ethylene bisoleamide; higher fatty acid esters; wax; and the like. The antistatic agent includes glycerin esters, sorbitan acid esters, or polyethylene glycol esters of higher fatty acids, and the like. The reinforcing agent includes metal fibers, glass fibers, carbon fibers, and the like.

The flame retardant includes phosphate esters, halogenated phosphate esters, halides, and the like. The coupling agent includes silane-based, titanate-based, chromium-based, and aluminum-based coupling agents. The colorant and the pigment include various azo pigments such as phthalocyanine-based, indigo-based, quinacridone-based, metal complex-based; basic and acidic water-soluble dyes; azo-based, anthraquinone-based, and perylene based oil-soluble dyes; various metal oxides such as titanium oxide, iron oxide, composite oxide; and other inorganic pigments such as chromate-based, sulfide-based, silicate-based, and carbonate-based. The blowing agent includes methylene chloride, butane, azobisisobutyronitrile, and the like. The releasing agent includes polyethylene wax, silicone oil, long-chain carboxylic acids, metal salts of long-chain carboxylic acids, and the like.

The oxygen absorbing multilayer film of the invention preferably contains the gas barrier material layer, the oxygen absorbing layer, and the sealing material layer as laminated in this order, but may further has the other protective layer described above, and in addition, if desired, for example, an adhesive layer including polyurethane may be provided between the constitutive layers, and a thermoplastic resin layer may also be provided.

The overall thickness of the oxygen absorbing multilayer film of the invention is less than 800 µm, and preferably 50 to 400 µm. Having the overall thickness falling within the above range, the multilayer film may have excellent transparency. The thickness of the oxygen absorbing layer may be generally 1 to 50 µm or so, and preferably 5 to 30 µm or so. The thickness of the gas barrier material layer may be generally 5 to 50 µm or so, and preferably 10 to 50 µm or so. The thickness of the sealing material layer may be generally 10 to 700 µm or so, and preferably 20 to 400 µm or so. When each of the constitutive layers is too thin, then the thickness of the multilayer film may be uneven, or the rigidity and the mechanical strength thereof may be insufficient. In case of the heat adhesive layer, when the heat adhesive resin is too thick or too thin, it may not exhibit the heat adhesiveness.

The method for producing the oxygen absorbing multilayer film of the invention is not particularly limited. Single layer films for the individual layers to constitute the multilayer film may be prepared and these may be laminated; or the multilayer film may be directly formed. The single layer films may be produced in any known method. For example, according to a solution-casting method that includes dissolving the resin composition or the like for forming the constitutive layer in a solvent, then casting the solution onto an almost flat face and drying it thereon, the film may be obtained. In addition, for example, the resin composition or the like for forming the constitutive layer may be melt-kneaded in an extruder, then extruded out through a T-die, a circular die (ring die) or the like to give a predetermined shape, thereby producing a T-die film, a blown film, and the like. As the extruder, usable is a kneading machine such as a single-screw extruder, a twin-screw extruder, or a Banbury mixer. The T-die film may be biaxially stretched to give a biaxially stretched film. The single layer films produced in the manner as above may be formed into a multilayer film according to an extrusion coating method, a sandwich lamination method, or a dry lamination method.

For direct molding of the multilayer extrusion film, employable is a known coextrusion method; and for example, the extrusion molding may be carried out in the same manner as above except that the number of extruders corresponding to the types of the resins are used and a multilayer multi-lamination die is used. The coextrusion molding method includes a coextrusion lamination method, a coextrusion sheet molding method, a coextrusion inflation molding method, and the like. As an example, according to a water-cooling or air-cooling inflation method, the resins to constitute respectively a gas barrier material layer, an oxygen absorbing layer, and a sealing material layer are separately heated and melted in different extruders, then extruded out through a multilayer ring die at an extrusion temperature of, for example, 190 to 250°C, and immediately quenched for solidification with a liquid coolant such as cooling water, thereby giving a tubular resin laminate.

In producing the multilayer film, the temperature of the ingredients to constitute each film layers is preferably 160 to 250°C. When it is less than 160°C, the layer thickness may be uneven and the film may be cut. On the other hand, when it is higher than 250°C, the film may also be cut. More preferably, the temperature is 170 to 240°C. The film take-up speed in producing the multilayer film may be generally 2 to 200 m/min, preferably 50 to 100 m/min. When the take-up speed is too low, then the production efficiency may be poor. On the other hand, when it is too high, then the film may not be sufficiently cooled and may be fused during taking up.

In case where the gas barrier material layer film is including a stretchable material and its properties are enhanced by stretching, as in the case of polyamide resins, polyester resins, polypropylene, and the like, then the multilayer film obtained through coextrusion may be further stretched uniaxially or biaxially. If desired, it may be further heat-set. The draw ratio in stretching is not particularly limited and may be generally 1 to 5 times in both the machine direction (MD) and the transverse direction (TD), preferably 2.5 to 4.5 times in both MD and TD. The stretching may be carried out in a known method of tenter stretching method, inflation stretching method, roll stretching method, or the like. The stretching may be carried out in any order of MD stretching or TD stretching; however, it is preferably carried out at the same time for MD and TD stretching. A tubular simultaneous biaxial stretching method may be employed. A film constituting the gas barrier material layer may be subjected to front surface printing, rear surface printing, or the like with a desired printing pattern, for example, letters, figures, symbols, designs, patterns, and the like by an ordinary printing method.

The shape of the oxygen absorbing multilayer film of the invention is not particularly limited, and the film may be any of a flat film, an embossed film, or the like. The packaging material including the oxygen absorbing multilayer film of the invention can be shaped into various forms of packaging containers and used. Regarding the forms of the packaging containers obtainable from the packaging material of the invention, there may be represented casings, bags, or the like. Regarding the forms of the packaging materials obtainable from the multilayer film of the invention, there may be represented ordinary, three-side sealed or four-side sealed pouches, gusseted pouches, standing pouches, pillow packaging bags, or the like. In case where the oxygen absorbing multilayer film is a flat film, it may be formed into a packaging material having a desired shape according to an ordinary method; and in case where the film is in the form of a tubular laminate, it may be formed into a casing or a bag directly as it is.

The packaging material of the invention including an oxygen absorbing multilayer film may be reheated at a temperature not higher than the melting point of the resins constituting it, and then uniaxially or biaxially stretched according to a thermoforming method of, for example, drawing, or according to a roll stretching method, a pantographic stretching method, an inflation stretching method, or the like, thereby giving a stretched molded article.

The packaging material obtained using the resin composition of the invention is effective for preventing the contents therein from being deteriorated by oxygen and for improving the shelf life thereof. The contents to be filled in the container are not particularly limited, but include, for example, foods such as rice cakes, ramen, fruits, nuts, vegetables, meat products, baby foods, coffee (beans or powder) , cooking oil, sauces, mayonnaise, ketchup, dressing, shellfishes boiled in sweetened soy sauce, dairy products, or Japanese and western-style sweets; drinks such as beer, wine, fruit juice, or carbonate drink; pharmaceuticals; cosmetics; electronic materials; medical equipment; packaging materials for silver or iron parts; chemicals such as adhesives or sticking agents; miscellaneous goods such as chemical lighter; or the like.

### Examples

The invention is described in greater detail with reference to the following Examples and Comparative Examples. Unless otherwise specifically indicated, part and % in all Examples are by weight.

Various measurements were made according to the following methods.

### [Weight average molecular weight (Mw) of cyclized product of conjugated diene polymer]

It is determined as a molecular weight in terms of polystyrene by gel permeation chromatography. Meanwhile, tetrahydrofuran was used as a solvent for elution.

### [Unsaturated bond reduction ratio of cyclized product of conjugated diene polymer]

It was determined by proton NMR analysis with reference to methods described in the following references (i) and (ii) . (i) M. A. Golub and J. Heller. Can., J. Chem., Vol. 41, p. 937 (1963), and (ii) Y. Tanaka and H. Sato, J. Polym. Sci.: Poly. Chem. Ed., Vol. 17, p. 3027 (1979). In the conjugated diene monomer unit segment in a conjugated diene polymer, when the overall proton peak area and the peak area of the protons directly bonded to the double bond before cyclization reaction are represented by SBT and by SBU, respectively, and the overall proton peak area and the peak area of the protons directly bonded to the double bond after cyclization reaction are represented by SAT and by SAU, respectively, then the peak area ratio (SB) of the protons directly bonded to the double bond before cyclization reaction is: SB = SBU/SBT, and the peak area ratio (SA) of the protons directly bonded to the double bond after cyclization reaction is: SA = SAU/SAT. Accordingly, the unsaturated bond reduction ratio is determined according to the following equation: Unsaturated bond reduction ratio (%) = 100 x (SB - SA)/SB

### [Glass transition temperature]

Using a differential scanning calorimeter (trade name: EXSTAR6000 DSC, manufactured by Seiko Instruments Inc.), it was measured in a nitrogen flow at a temperature-raising speed of 10°C/min.

### [Oxygen concentration]

The oxygen concentration inside the pouch was measured with an oxygen densitometer (trade name: Food Checker HS-750, manufactured by Ceramatec, Inc.) after withdrawing part of the gas present inside the pouch using a syringe.

### [Level of malodor]

Five panelists evaluated the malodor by a sensory evaluation according to the following criteria, and their average score was taken as level of malodor.

| | |
|---|---|
| No smell at all····· | Evaluation score 1 |
| Only slight smell····· | Evaluation score 2 |
| Slight acid smell····· | Evaluation score 3 |
| Strong acid smell····· | Evaluation score 4 |
| Very strong acid smell····· | Evaluation score 5 |

### [Production Example]

100 parts of polyisoprene (cis-1,4-bond structure unit content, 73%; trans-1,4-bond structure unit content, 22%; 3,4-bond structure unit content, 5%; weight average molecular weight, 243,100) cut into 10 mm square pieces were put into a pressure-resistant reactor equipped with a stirrer, a thermometer, a reflux condenser, and a nitrogen gas inlet tube, along with 374 parts of cyclohexane. The reactor was purged with nitrogen. The contents were heated to 75°C, and with stirring, polyisoprene was completely dissolved in cyclohexane, and thereafter 0. 95 part of p-toluene sulfonic acid (which has been dehydrated in toluene by reflux to have a water content of 150 ppm or less) as a 15% toluene solution thereof was put into it to carry out cyclization reaction at a temperature not higher than 80°C. After carrying out the reaction for 7 hours, 25% aqueous sodium carbonate solution containing 0.59 part of sodium carbonate was put into it to stop the reaction. Then at 80°C, water was removed by azeotropic refluxing dehydration, and thereafter the catalyst residue was removed from the reaction liquid through a glass fiber filter having a pore size of 2 µm. Cyclohexane was distilled off from the solution obtained, and toluene was also removed by drying in vacuo to obtain a cyclized product of a conjugated diene polymer in solid state. With regard to the cyclized product of a conjugated diene polymer, the weight average molecular weight was 190, 800, unsaturated bond reduction ratio was 64.6%, and glass transition temperature was 60°C.

The cyclized product of a conjugated diene polymer obtained in solid state was kneaded using a single screw kneading extruder (40 φ, L/D = 2.5, die diameter 3 mm × 1 hole, manufactured by Ikegai Corp.) under the kneading condition of cylinder 1: 140°C, cylinder 2: 150°C, cylinder 3: 160°C, cylinder 4: 170°C, die temperature: 170°C, and screw revolution speed: 25 rpm, thereby giving pellets.

### [Example 1]

21 parts of the pellets of the cyclized product of a conjugated diene polymer obtained from Production Example, 7 parts of isostearic acid (trade name: PRISORINE 3505, manufactured by Croda Japan KK, pour point of -80°C or less (JIS K2269)), 2 parts of liquid paraffin (trade name: HICOL K-350, manufactured by Kaneda Co., Ltd.) and 70 parts of the pellets of polyamide 6 resin (NOVAMID 1015C^{™}, manufactured by Mitsubishi Engineering-Plastics Corporation) were mixed with one another. The mixture obtained was kneaded using a twin screw kneading extruder (43 φ, L/D = 33.5, ZE 40A^{™} manufactured by KraussMaffei Berstorff GmbH) under the kneading condition of cylinder 1: 150°C, cylinder 2: 200°C, cylinder 3: 200°C, cylinder 4: 200°C, die temperature: 220°C, and screw revolution speed: 150 rpm, thereby giving the pellets of the resin composition of Example 1. The resin composition of Example 1 had a constitution that the oxygen absorbing resin composition consisting of a cyclized product of a conjugated diene polymer, isostearic acid, and liquid paraffin was dispersed in polyamide 6 resin. When the glass transition temperature was measured for the resin composition of Example 1 as a test sample, the oxygen absorbing resin composition contained in the resin composition had glass transition temperature of 15°C. Addition amount of each component for the resin composition of Example 1 and glass transition temperature of the oxygen absorbing resin composition were summarized in Table 1.

Subsequently, pellets of the resin composition of Example 1 were kneaded using a single screw kneading extruder LABO PLASTOMILL connected with a T die and a biaxial extension tester under the kneading condition of cylinder 1: 180°C, cylinder 2: 225°C, cylinder 3: 225°C, die temperature: 2255°C, and revolution speed: 10 rpm, and then molded into a film having width of 100 mm and thickness of 20 µm under the condition of take over rate: 2.0 m/min and winding roll temperature: 40°C, thereby obtaining the film of Example 1. The resulting film of Example 1 was cut to have the length of 100 mm, and then subjected to the oxygen absorption test as described below. Specifically, the prepared film was put into an aluminum pouch having a size of 300 mm × 400 mm, then air inside the pouch was completely removed, 50 cc of air was injected, and the aluminum pouch was sealed. Right after the sealing, the oxygen concentration inside the aluminum pouch was measured, and then the aluminum pouch was left to standstored for 7 days at 23°C. After keeping it for 7 days, the oxygen concentration inside the aluminum pouch was measured to determine the total amount of oxygen absorbed by the film of Example 1. Finally, the aluminum pouch was opened and the level of malodor inside the aluminum pouch was evaluated. The measurement results are summarized in Table 1.

**[Table 1]**

| | | Example | | | | Comparative Example | |
|---|---|---|---|---|---|---|---|
| | | 1 | 2 | 3 | 4 | 1 | 2 |
| Formulation (parts) | | | | | | | |
| Oxygen absorbing resin composition | Cyclized product of conjugated diene polymer | 21 | 21 | 21 | 21 | 21 | 21 |
| | Isostearic acid | 7 | 7 | - | - | - | - |
| | Hydrogenated product of dimer acid | - | - | 4 | 4 | - | - |
| | Oleic acid | - | - | - | - | 7 | - |
| | Liquid paraffin | 2 | 2 | 5 | 5 | 2 | 9 |
| Matrix resin | Polyamide 6 resin | 70 | - | 70 | - | 70 | 70 |
| | Polybutylene terephthalate resin | - | 70 | - | 70 | - | - |
| Glass transition temperature of oxygen absorbing resin composition (°C) | | 15 | 15 | 15 | 15 | 15 | 15 |

| Evaluation | | | | | | | |
|---|---|---|---|---|---|---|---|
| Oxygen absorption amount after keeping for 7 days (cc) | | 2.7 | 7.6 | 2.6 | 6.0 | 2.4 | 0.3 |
| Level of malodor after keeping for 7 days | | 1.0 | 1.0 | 1.0 | 1.0 | 4.0 | 1.0 |

### [Example 2]

Pellets of the resin composition of Example 2 were obtained in the same manner as Example 1 except that 70 parts of the pellets of a polybutylene terephthalate resin (trade name: NOVADURAN 5020, manufactured by Mitsubishi Engineering-Plastics Corporation) were used instead of 70 parts of the pellets of polyamide 6 resin. The resin composition of Example 2 had a constitution that the oxygen absorbing resin composition including a cyclized product of a conjugated diene polymer, isostearic acid, and liquid paraffin was dispersed in a polybutylene terephthalate resin. When the glass transition temperature was measured for the resin composition of Example 2 as a test sample, the oxygen absorbing resin composition contained in the resin composition had glass transition temperature of 15°C. Addition amount of each component for the resin composition of Example 2 and glass transition temperature of the oxygen absorbing resin composition were summarized in Table 1. Further, the resin composition of Example 2 was molded in the same manner as Example 1 to obtain the film of Example 2, and the resulting film was subjected to the same oxygen absorption test as Example 1. Measurement results of the total amount of oxygen absorbed by the film of Example 2 for 7 days and malodor level evaluation, which have been obtained by the oxygen absorption test, were summarized in Table 1.

### [Example 3]

Pellets of the resin composition of Example 3 were obtained in the same manner as Example 1 except that 4 parts of hydrogenated product of dimer acid (trade name: PRIPOL 1009, manufactured by Croda Japan KK, carbon atom number of 36, pour point of 5°C or less (JIS K2269)) were used instead of 7 parts of isostearic acid and the use amount of liquid paraffin was changed to 5 parts. The resin composition of Example 3 had a constitution that the oxygen absorbing resin composition including a cyclized product of a conjugated diene polymer, a hydrogenated product of dimer acid, and liquid paraffin was dispersed in polyamide 6 resin. When the glass transition temperature was measured for the resin composition of Example 3 as a test sample, the oxygen absorbing resin composition contained in the resin composition had glass transition temperature of 15°C. Addition amount of each component for the resin composition of Example 3 and glass transition temperature of the oxygen absorbing resin composition were summarized in Table 1. Further, the resin composition of Example 3 was molded in the same manner as Example 1 to obtain the film of Example 3, and the resulting film was subjected to the same oxygen absorption test as Example 1. Measurement results of the total amount of oxygen absorbed by the film of Example 3 for 7 days and malodor level evaluation, which have been obtained by the oxygen absorption test, were summarized in Table 1.

### [Example 4]

Pellets of the resin composition of Example 4 were obtained in the same manner as Example 2 except that 4 parts of hydrogenated product of dimer acid (trade name: PRIPOL 1009, manufactured by Croda Japan KK, carbon atom number of 36, pour point of 5°C or less (JIS K2269)) were used instead of 7 parts of isostearic acid and the use amount of liquid paraffin was changed to 5 parts. The resin composition of Example 4 had a constitution that the oxygen absorbing resin composition including a cyclized product of a conjugated diene polymer, a hydrogenated product of dimer acid, and liquid paraffin was dispersed in a polybutylene terephthalate resin. When the glass transition temperature was measured for the resin composition of Example 4 as a test sample, the oxygen absorbing resin composition contained in the resin composition had glass transition temperature of 15°C. Addition amount of each component for the resin composition of Example 4 and glass transition temperature of the oxygen absorbing resin composition were summarized in Table 1. Further, the resin composition of Example 4 was molded in the same manner as Example 1 to obtain the film of Example 4, and the resulting film was subjected to the same oxygen absorption test as Example 1. Measurement results of the total amount of oxygen absorbed by the film of Example 4 for 7 days and malodor level evaluation, which have been obtained by the oxygen absorption test, were summarized in Table 1.

### [Comparative Example 1]

Pellets of the resin composition of Comparative Example 1 were obtained in the same manner as Example 1 except that 7 parts of oleic acid (manufactured by Wako Pure Chemical Industries, Ltd., pour point of 15°C or less (JIS K2269)), which was a linear unsaturated fatty acid having 18 carbon atoms, were used instead of isostearic acid. The resin composition of Comparative Example 1 had a constitution that the oxygen absorbing resin composition including a cyclized product of a conjugated diene polymer, oleic acid, and liquid paraffin was dispersed in polyamide 6 resin. When the glass transition temperature was measured for the resin composition of Comparative Example 1 as a test sample, the oxygen absorbing resin composition contained in the resin composition had glass transition temperature of 15°C. Addition amount of each component for the resin composition of Comparative Example 1 and glass transition temperature of the oxygen absorbing resin composition were summarized in Table 1. Further, the resin composition of Comparative Example 1 was molded in the same manner as Example 1 to obtain the film of Comparative Example 1, and the resulting film was subjected to the same oxygen absorption test as Example 1. Measurement results of the total amount of oxygen absorbed by the film of Comparative Example 1 for 7 days and malodor level evaluation, which have been obtained by the oxygen absorption test, were summarized in Table 1.

### [Comparative Example 2]

Pellets of the resin composition of Comparative Example 2 were obtained in the same manner as Example 1 except that isostearic acid was not used and the use amount of liquid paraffin was changed to 9 parts. The resin composition of Comparative Example 2 had a constitution that the oxygen absorbing resin composition including a cyclized product of a conjugated diene polymer and liquid paraffin was dispersed in polyamide 6 resin. When the glass transition temperature was measured for the resin composition of Comparative Example 2 as a test sample, the oxygen absorbing resin composition contained in the resin composition had glass transition temperature of 15°C. Addition amount of each component for the resin composition of Comparative Example 2 and glass transition temperature of the oxygen absorbing resin composition were summarized in Table 1. Further, the resin composition of Comparative Example 2 was molded in the same manner as Example 1 to obtain the film of Comparative Example 2, and the resulting film was subjected to the same oxygen absorption test as Example 1. Measurement results of the total amount of oxygen absorbed by the film of Comparative Example 2 for 7 days and malodor level evaluation, which have been obtained by the oxygen absorption test, were summarized in Table 1.

As described in the results given above, the resin composition containing an oxygen absorbing resin composition in which no fatty acid was included exhibited almost no oxygen absorbing performance even after 7 days at 23°C condition (Comparative Example 2). Further, the resin composition containing an oxygen absorbing resin composition in which oleic acid was included as an unsaturated fatty acid exhibited oxygen absorbing performance but generated malodor associated with oxygen absorption (Comparative Example 1) . On the other hand, each of the resin composition of the invention had an excellent oxygen absorbing property, exhibiting satisfactory oxygen absorbing performance for 7 days even at relatively low temperature condition such as 23°C. In addition, low level of malodor was maintained even after oxygen absorption, and therefore it can be said that each of the resin composition of the invention had an excellent low malodor property with suppressed generation of malodor, which was associated with oxygen absorption (Examples 1 to 4).

## Claims

1. A resin composition comprising an oxygen absorbing resin composition dispersed in a matrix resin, **characterized in that** the oxygen absorbing resin composition comprises a cyclized product of a conjugated diene polymer and a saturated fatty acid having 18 to 44 carbon atoms.

2. The resin composition according to Claim 1, **characterized in that** a pour point of the saturated fatty acid having 18 to 44 carbon atoms is 25°C or less.

3. The resin composition according to Claim 1 or 2, **characterized in that** the saturated fatty acid having 18 to 44 carbon atoms is an isostearic acid or a hydrogenated product of dimer acid.

4. The resin composition according to any one of Claims 1 to 3, **characterized in that** an addition amount of the saturated fatty acid having 18 to 44 carbon atoms is 0.1 to 50% by weight relative to total amount of the oxygen absorbing resin composition.

5. The resin composition according to any one of Claims 1 to 4, **characterized in that** the oxygen absorbing resin composition further comprises a softening agent.

6. The resin composition according to any one of Claims 1 to 5, **characterized in that** the matrix resin is a polyamide resin or a polybutylene terephthalate resin.

7. A film for packaging comprising the resin composition described in any one of Claims 1 to 6.
